**Europäisches Patentamt**

**European Patent Office**

**Office européen des brevets**

(19)

(11) Publication number : **0 204 664**
**B1**

(12)

# EUROPEAN PATENT SPECIFICATION

(45) Date of publication of patent specification :
15.03.89

(51) Int. Cl.⁴ : **F 16 H 5/08**, F 16 H 3/38

(21) Application number : 86830128.4

(22) Date of filing : 19.05.86

(54) Motor vehicle gearbox with constantly-meshed gears.

(30) Priority : 04.06.85 IT 6751485

(43) Date of publication of application :
10.12.86 Bulletin 86/50

(45) Publication of the grant of the patent :
15.03.89 Bulletin 89/11

(84) Designated contracting states :
DE FR GB SE

(56) References cited :
EP--A-- 0 025 734
DE--A-- 2 319 397
FR--A-- 1 359 905
FR--A-- 2 378 215
GB--A-- 2 110 778
US--A-- 4 503 957

(73) Proprietor : **FIAT AUTO S.p.A.**
**Corso Giovanni Agnelli 200**
**I-10135 Torino (IT)**

(72) Inventor : **Bono, Piero**
**Via Ferrero di Cambiano 29/8**
**I-10024 Moncalieri (Torino) (IT)**
Inventor : **Ghione, Ferruccio**
**via Guala 141**
**I-10135 Torino (IT)**

(74) Representative : **Buzzi, Franco et al**
**c/o Jacobacci-Casetta & Perani S.p.A. Via Alfieri, 17**
**I-10121 Torino (IT)**

## Description

The present invention relates to motor vehicle gearboxes in general.

In particular, the invention concerns a gearbox of the type comprising a shaft and a layshaft carrying respective constantly-meshed gears, and a reversing shaft carrying a slidable idler gear arranged for meshing with respective reverse gears carried by the shaft and the layshaft, and in which a selector rod parallel to the said shafts is provided, which is movable axially in opposite directions relative to a neutral intermediate position to effect the engagement of the highest ratio and reverse respectively by means of respective control forks, of which that for reverse acts on the idler gear and that for the highest ratio is fitted to a grooved slidable coupling sleeve having internal teeth slidably engaged with a toothed hub rigid with the gear shaft, and in which means are provided for opposing the sliding of the slidable coupling sleeve relative to the toothed hub in the direction of movement of the selector rod corresponding to the engagement of reverse.

A gearbox of this type is described and illustrated, for example, in US-A-4503957.

In motor vehicle gearboxes of the type defined above, the correct meshing of the idler gear and the respective reverse gears carried by the shaft and the layshaft presents difficulties whenever reverse is engaged by axial movement of the idler gear by the respective fork controlled by the selector rod. In fact, in these circumstances, while the layshaft and the idler gear are normally stationary, the gear shaft has a certain angular velocity which must be transmitted to the idler gear and then to the gear of the layshaft upon engagement of reverse. This may cause difficulties of meshing initially between the teeth of the idler gear and that carried by the shaft, and subsequently between the teeth of the idler gear and the gear carried by the layshaft, with consequent irritating noises.

. The object of the present invention is to avoid this disadvantage and to achieve a motor vehicle gearbox of the type defined at the beginning, which is provided in a simple and cheap manner with an effective system for synchronising the shaft and the layshaft upon the engagement of reverse.

According to the invention, this object is achieved by virtue of the fact that the control fork for the highest ratio and the slidable coupling sleeve have conical mutual braking surfaces which both diverge in the direction of movement of the selector rod corresponding to the engagement of reverse.

By virtue of this solution, when the idler gear moves into mesh with the reverse gears of the shaft and the layshaft of the gearbox, braking of the shaft is achieved by virtue of the interference between the conical surfaces, which enables the easy and safe engagement of the teeth of the idler gear with those of the reverse gears carried by the shaft and the layshaft of the gearbox to be ensured.

According to the invention, the opposing means of the slidable coupling sleeve include a synchronising roller interposed between the coupling sleeve and the toothed hub and biased by a spring into engagement with an internal annular groove in the coupling sleeve.

This groove conveniently has an asymmetric profile with the side wall which faces in the opposite direction from the direction of movement of the selector rod corresponding to the engagement of reverse having a steeper inclination than the opposite side wall.

The invention will now be described in detail with reference to the appended drawings, provided purely by way of non-limiting example, in which :

Figure 1 is a partially-sectioned, schematic, longitudinal view of a motor vehicle gearbox according to the invention,

Figure 2 illustrates a detail of Figure 1 on an enlarged scale, and

Figures 3 to 5 show the same detail in three different operating conditions of the gearbox.

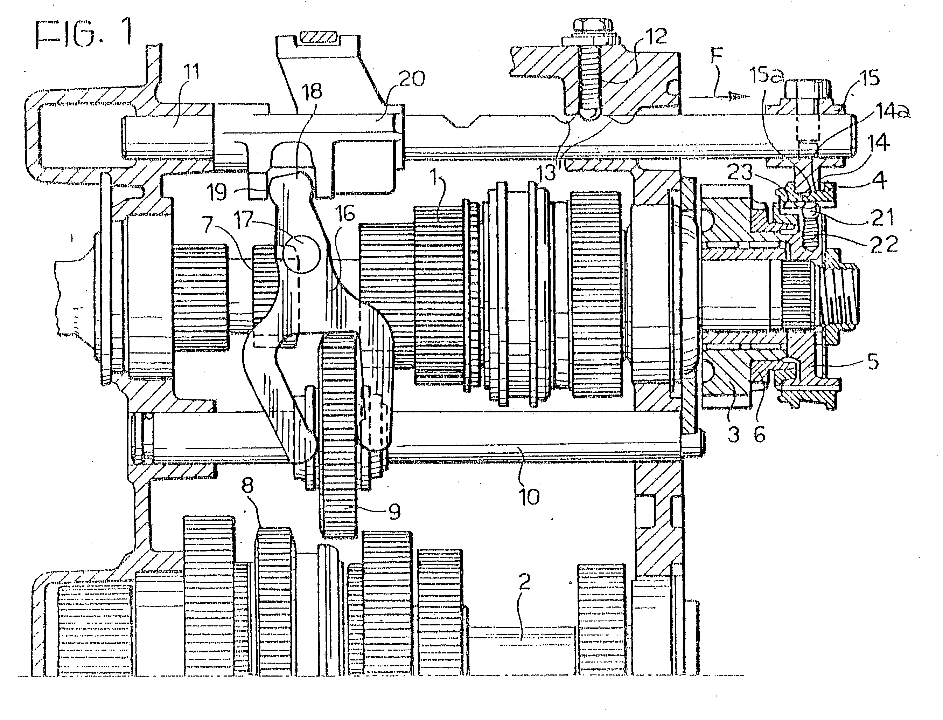

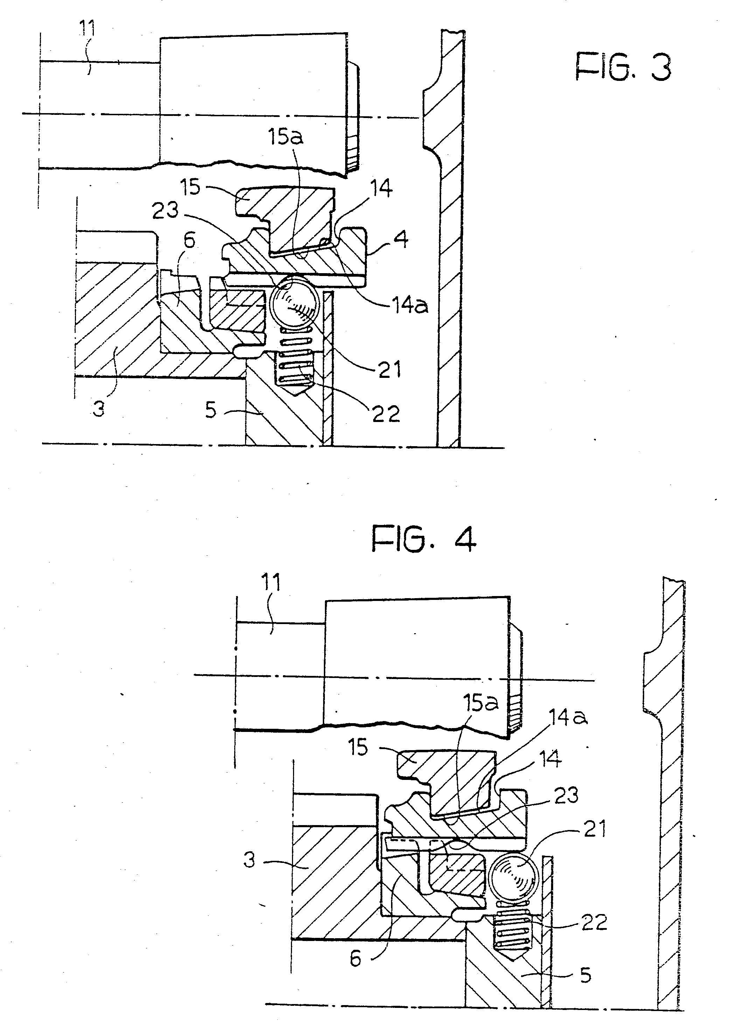

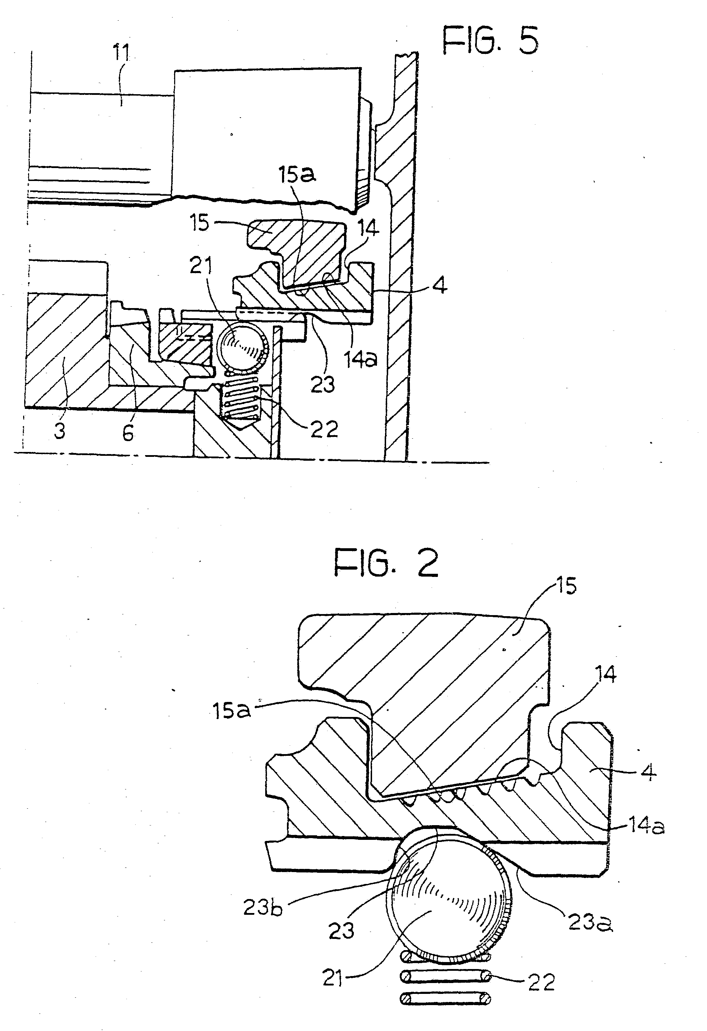

With reference initially to Figure 1, the shaft and layshaft of a motor vehicle gearbox with constantly-meshed gears are indicated 1 and 2 respectively. The gearbox is of generally known type and therefore will not be described in detail. For the purposes of the present invention it suffices to say that a gear 3 corresponding to the highest ratio, that is the fifth gear in the case of a five-speed gearbox, is rotatably mounted on the shaft 1 and meshes with a corresponding gear for the highest ratio, not illustrated, keyed onto the layshaft 2. In order to render the gear 3 fast for rotation with the shaft 1, an internally-toothed coupling sleeve 4 is provided which meshes in slidable manner with a toothed hub 5 keyed onto the shaft 3 and is movable axially, in the manner explained below, between a position of disengagement of the highest ratio, illustrated in Figure 1 and also in Figures 3 and 4, and a position of engagement of the highest ratio, illustrated in Figure 5, in which the coupling sleeve 4 engages a ring gear 6 rigid with the gear 3 so as to render this gear 3 fast for rotation with the toothed hub 5 and consequently with the shaft 1.

A reverse gear 7 is also keyed onto the shaft 1 and a corresponding reverse gear 8 is keyed onto the layshaft 2. The reverse gears 7 and 8 can be connected together by means of an idler gear 9 slidably mounted on a reversing shaft 10 parallel to the shaft 1 and the layshaft 2. In the manner explained below, the idler gear 9 is movable between a rest position, illustrated in full outline in Figure 1, in which the reverse gears 7 and 8 are disconnected from each other and an operative position, illustrated in broken outline in Figure 1, in which it connects the gears 7 and 8 for rotation.

In order to effect the engagement of the highest ratio or reverse, a single selector rod 11 is provided which is parallel to the shafts 1, 2 and 10 and is movable axially in opposite directions from an intermediate neutral position, illustrated in Figure 1, to respective positions for engaging the highest ratio (towards the left with respect Figure 1) and for engaging reverse (towards the right with respect to Figure 1). In order to ensure the secure location of the selector rod 1 in the chosen position, a snap-positioning device 12 is provided which cooperates with corresponding notches 13 in the rod itself.

The movement of the rod 11 into one or other of the positions of engagement of the highest ratio or reverse causes a corresponding movement of the coupling sleeve 4 or the idler gear 9 respectively. In fact, the coupling sleeve 4 has a circumferential groove 14 in which a control fork 15 fixed to the rod 11 is engaged, while the idler gear 9 is coupled in the manner illustrated to a fork 16 pivotable about a transverse pin 17 carried by the fixed structure of the gearbox and having a part 18 engaged in a groove 19 of a sleeve member 20 slidable on the rod 11. One-way locking means, not illustrated, are provided for locking the sleeve member 20 to the rod 11 when the latter is moved towards the right with respect to Figure 1, that is from its neutral position to the operative position corresponding to the engagement of reverse, and for allowing the rod 11 to slide relative to the sleeve member 20 when the rod 11 is moved towards the left with respect to Figure 1, that is from its neutral position to the operative position corresponding to the engagement of the fifth gear. These one-way locking means are described and illustrated, for example, in Italian utility model application no. 53633-B/84 in the name of the applicants.

According to the invention, the control fork 15 for the highest ratio and the groove 14 of the coupling sleeve 4 have respective mutual coupling surfaces 15a and 14a which are conical in shape and diverge in the direction of movement of the selector rod 11 corresponding to the engagement of reverse, that is towards the right with respect to Figure 1. For convenience, this direction is indicated by the arrow F in Figure 1.

Also in accordance with the invention, means are provided for opposing the sliding of the sleeve 4 relative to the toothed hub 5 in the same direction F. In the example illustrated, these opposing means are constituted by a synchronising roller 21 interposed between the coupling sleeve 4 and the toothed hub 5 and biased into engagement with an internal annular groove 23 in the coupling sleeve 4 by a radial spring 22. As illustrated in greater detail in Figure 2, the groove 23 has an asymmetric profile with one side wall 23a having a less marked and more gradual inclination than the opposite side wall 23b which is almost radial.

As will be apparent, whenever the selector rod 11 is moved in the direction of the arrow F from its neutral intermediate position towards the position of engagement of reverse, the sleeve member 20 moves in the same direction to effect pivoting of the fork 16 about the pin 17 and sliding of the idler gear 9 along the shaft 10 towards the position of engagement of the gears 7 and 8. Simultaneously, the movement of the selector rod 11 causes a corresponding movement of the fork 15 which initially brings the conical surface 15a into interference with the conical surface 14a of the sleeve 4. In this situation, the sleeve 4 also tends to move in the direction of the arrow F with respect to the central position illustrated in Figure 1 and Figure 3 (the neutral position). This tendency of the sleeve 4 is opposed initially, however, by the presence of the roller 21 which is engaged in the groove 23 under the action of the spring 22 and bears against the steeper wall 23b of this groove 23. The biasing action exerted by the roller 21 facilitates the interaction between the conical surfaces 15a and 14a and the generation of a braking action on the coupling sleeve 4 by the fork 15 and hence on the gear shaft 1 through the toothed hub 5. This braking action facilitates the correct meshing initially between the idler gear 9 and the reverse gear 7 and subsequently between the idler gear 9 and the reverse gear 8 carried by the layshaft 2.

Naturally, during further movement of the selector rod 11 in the direction of the arrow F, the opposing roller 21 is disengaged from the groove 23 whereby the coupling sleeve 4 is drawn to the position illustrated in Figure 5, corresponding to the condition of engagement of the reverse.

However, when the selector rod 11 is moved in the direction opposite the arrow F from its neutral central position illustrated in Figures 1 and 3, that is in the direction corresponding to the engagement of the highest ratio, the opposing roller 21 acts on the sleeve 4, gradually being released from the groove 23 along the more gently sloping wall 23a thereof. At the end of this movement of the selector rod 11, the coupling sleeve 4 is located in the position illustrated in Figure 4, corresponding in fact to the engagement of the highest ratio. During this operation, the sleeve member 20 is kept stationary while the selector rod 11 slides within it, so that the idler gear 9 does not move along the reversing shaft 10.

## Claims

1. Motor vehicle gearbox comprising a shaft (1) and a layshaft (2) carrying respective constantly-meshed gears, and a reversing shaft (10) carrying a slidable reverse idler gear (9) for meshing with respective reverse gears (7, 8) carried by the shaft and the layshaft, and in which a selector rod (11) parallel to the said shafts (1, 2, 10) is provided, which is movable axially in opposite directions relative to a neutral intermediate position to effect the engagement of the highest ratio and reverse respectively by means of respective control forks (15, 16), of which that for reverse acts on the idler gear (9) and that for the highest ratio is coupled to a slidable grooved coupling sleeve (4) having internal teeth slidably engaged with a toothed hub (5) rigid with the gear shaft (1), and in which means (21, 22, 23) are provided for opposing the sliding of the slidable coupling sleeve (4) relative to the toothed hub (5) in the direction of movement (F) of the selector rod (11) corresponding to the engagement of reverse, characterised in that the control fork (15) for the highest ratio and the slidable coupling sleeve (4) have conical mutual braking surfaces (15a, 14a) which both diverge in the direction of movement (F) of the selector rod (11) corresponding to the engagement of reverse.

2. Gearbox according to Claim 1, characterised in that the opposing means comprise a roller (21) interposed between the coupling sleeve (4) and the toothed hub (5) and urged by a biasing spring (22) into engagement with an internal annular groove (23) in the coupling sleeve (4).

3. Gearbox according to Claim 2, characterised in that the annular groove (23) has an asymmetric profile with the side wall (23b) which faces in the opposite direction from the direction of movement (F) of the selector rod (11) corresponding to the engagement of reverse having an inclination which is considerably more marked than that of the opposite side wall (23a).

**Patentansprüche**

1. Kraftfahrzeug-Wechselgetriebe mit einer Welle (1) und einer Vorgelegewelle (2), die jeweils ständig miteinander in Eingriff stehende Zahnräder tragen, mit einer Welle (10) für den Rückwärtsgang, die ein auf ihr gleitbar und freilaufend angeordnetes Rückwärtsgangzahnrad (9) trägt das mit zugeordneten auf der Welle und der Vorgelegewelle angeordneten Rückwärtsgang-Zahnrädern (7, 8) in Eingriff bringbar ist, mit einer parallel zu den genannten Wellen (1, 2, 10) angeordneten Schaltstange (11), die von einer neutralen Zwischenstellung aus axial in entgegengesetzten Richtungen bewegbar ist, um mit Hilfe entsprechender Schaltgabeln (15, 16) das Einrücken des größten Gangs bzw. des Rückwärtsgangs zu bewirken, wobei die Schaltgabel (16) für den Rückwärtsgang auf das freilaufende Rückwärtsgang-Zahnrad (9) einwirkt und die Schaltgabel für den größten Gang mit einer gleitbaren, mit einer Nut versehenen Kupplungsmuffe (4) gekuppelt ist, die eine Innenverzahnung besitzt, die gleitbar mit einer mit der Welle (1) des Wechselgetriebes drehstarr verbundenen gezahnten Nabe (5) in Eingriff steht, wobei Mittel (21, 22, 23) vorgesehen sind, die der Gleitbewegung der gleitbaren Kupplungsmuffe (4) relativ zu der Nabe (5) in der dem Einrücken des Rückwärtsgangs entsprechenden Bewegungsrichtung (F) der Schaltstange (11) Widerstand entgegensetzen, dadurch gekennzeichnet, daß die Schaltgabel (15) für den größten Gang und die gleitbare Kupplungsmuffe (4) miteinander korrespondierende konische Reibungsflächen (15a, 14a) haben, die beide in Richtung der dem Einrücken des Rückwärtsgangs entsprechenden Bewegung (F) der Schaltstange (11) divergieren.

2. Wechselgetriebe nach Anspruch 1, dadurch gekennzeichnet, daß die entgegenwirkenden Mittel eine Rolle (21) umfassen, die zwischen der Kupplungsmuffe (4) und der gezahnten Nabe (5) angeordnet ist und durch eine Vorspannfeder (22) in Eingriff mit einer ringförmigen Innennut (23) der Kupplungsmuffe (4) gedrückt wird.

3. Wechselgetriebe nach Anspruch 2, dadurch gekennzeichnet, daß die ringförmige Innennut (23) ein unsymmetrisches Profil besitzt, wobei diejenige Seitenwandung (23b) dieses Profils, die in die Richtung weist, welche der dem Einrücken des Rückwärtsgangs entsprechenden Bewegungsrichtung (F) der Schaltstange entgegengesetzt ist, eine Neigung hat, die wesentlich steiler ist als diejenige der entgegengesetzten Seitenwandung (23a).

**Revendications**

1. Boîte de vitesses de véhicule automobile comprenant un arbre (1) et un arbre intermédiaire (2) qui portent des pignons respectifs en prise constante, et un arbre de marche arrière (10) portant un pignon de renvoi de marche arrière coulissant (9) destiné à entrer en prise avec des pignons de marche arrière respectifs (7, 8) portés par l'arbre et par l'arbre intermédiaire, et dans laquelle il est prévu un coulisseau (11) parallèle auxdits arbres (1, 2, 10), qui peut se déplacer axialement dans les deux sens par rapport à une position intermédiaire ou de point mort pour exécuter l'enclenchement du grand rapport et de la marche arrière respectivement, à l'aide de fourchettes de commande respectives (15, 16) dont celle qui est affectée à la marche arrière agit sur le pignon de renvoi (9) et celle qui est affectée au grand rapport est accouplée à un manchon d'accouplement à gorge coulissant (4) qui possède des dents intérieures en prise à coulissement avec un moyeu denté (5) rigidement solidaire de l'arbre des pignons (1), et dans laquelle des moyens (21, 22, 23) sont prévus pour bloquer le coulissement du manchon d'accouplement coulissant (4) par rapport au moyeu denté (5) dans le sens du mouvement (F) du coulisseau (11) qui correspond à l'enclenchement de la marche arrière, caractérisée en ce que la fourchette de commande (15) affectée au grand rapport et le manchon d'accouplement coulissant (4) possèdent des surfaces de freinage mutuel coniques (15a, 14a) qui, toutes deux, divergent dans le sens du mouvement (F) du coulisseau (11) qui correspond à l'enclenchement de la marche arrière.

2. Boîte de vitesses selon la revendication 1, caractérisée en ce que les moyens de blocage comprennent un élément roulant (21) interposé entre le manchon d'accouplement (4) et le moyeu denté (5) et qu'un ressort de sollicitation (22) tend à mettre en prise avec une gorge annulaire intérieure (23) ménagée dans le manchon d'accouplement (4).

3. Boîte de vitesses selon la revendication 2, caractérisée en ce que la gorge annulaire (23) présente un profil asymétrique, dans lequel le flanc (23b) qui est en regard du sens inverse au mouvement (F) du coulisseau (11) qui correspond à l'enclenchement de la marche arrière présente une inclinaison qui est beaucoup plus accentuée que celle du flanc opposé (23a).

FIG. 1

FIG. 3

11

15a

15

23

6

14

4

14a

21

22

3

5

FIG. 4

11

15a

14a

15

14

23

3

21

22

6

5

## FIG. 5

## FIG. 2